# EUROPÄISCHE PATENTSCHRIFT

(11) **EP 1 128 606 B1**
(45) Veröffentlichungstag und Bekanntmachung des Hinweises auf die Patenterteilung: **02.08.2006**
(21) Anmeldenummer: 01104100.1
(22) Anmeldetag: 21.02.2001
(51) Int. Cl.: H04L 12/437

(54) **Verfahren zur stochastischen Fehlerortung in einem massiv homogenen System in einem undirektionalen isochronen Netzwerk mit Ringtopologie**
Method of stochastic fault location in a massively homogeneous system in an unidirectional isochronous netwok with ring topology
Méthode de localisation stochastique d'erreurs dans un système homogène massif d'un réseau isochrone unidirectionel avec topologie en anneau

(30) Priorität: 26.02.2000 DE 10009024
(43) Veröffentlichungstag der Anmeldung: 29.08.2001
(73) Patentinhaber: Interessengemeinschaft für Rundfunkschutzrechte GmbH Schutzrechtsverwertung & Co. KG., 40210 Düsseldorf (DE)
(72) Erfinder: Wellenhöfer, Stefan, 90762 Fürth (DE); Hohmann, Wolfram, 90574 Rosstal (DE)
(74) Vertreter: Pröll, Jürgen

(56) Entgegenhaltungen:
- EP-A- 0 510 290
- WO-A-95/01020
- US-A- 5 392 281

## Beschreibung

Die Erfindung betrifft ein Verfahren zur Fehlerortung in einem massiv homogenen System mit einem unidirektionalen isochronen Netzwerk mit Ringtopologie, sowie ein unidirektionalen isochronen Netzwerk mit Ringtopologie und einen Netzwerkteilnehmer des unidirektionalen isochronen Netzwerks mit Ringtopologie.

Unidirektionale isochrone Netzwerke mit Ringtopologie zeichnen sich durch folgende Merkmale aus:

Im Netzwerk werden Datenpakete gleicher Größe in gleichen Zeitabständen versendet. Es ist ein einheitlicher Netzwerktakt vorgesehen. Der einheitliche Netzwerktakt wird von einem einzigen Teilnehmer, dem sogenannten "Clock-Master" erzeugt. Unidirektionale Netzringe verfügen lediglich über einen einzigen gerichteten Informationspfad. Ein Ausfall eines einzigen oder mehreren Netzwerkteilnehmern oder eines einzigen oder mehreren Netzwerkpfade führt dazu, daß die Erreichbarkeit aller Netzwerkteilnehmer durch alle Netzwerkteilnehmer nicht mehr gewährleistet ist. Der Netzwerkbetrieb ist dadurch nicht mehr möglich. Rückantworten, wie Quittierungen bzw. Fehlermeldungen, welche auf eine gesendete Nachricht erfolgen, sind dann komplett unmöglich. Daher ist es notwendig den Fehlerort unmittelbar und topologisch eindeutig, von einer zentralen Stelle aus, lokalisieren zu können.

Massiv homogene Systeme zeichnen sich im weiteren dadurch aus, daß sie im Gegensatz zu inhomogenen Systemen, welche aus einer Anzahl qualitativ unterschiedlicher Netzwerkteilnehmer bestehen, eine große Anzahl qualitativ identischer Teilnehmer miteinander vernetzen. Ein Beispiel für ein inhomogenes Netzwerk ist ein Netzwerk, das einen Zentralcomputer, einen CD-Spieler, einen digitalen Verstärker, sowie einen Radioempfänger über ein multimedia Netzwerk, beispielsweise einen MOST-Bus miteinander verbindet.
Ein Beispiel für ein massiv homogenes System ist ein System in dem über ein multimedia Netzwerk, wie beispielsweise einem MOST-Bus, eine digitale Audioquelle mit einer großen Anzahl nicht voneinander unterscheidbarer Audisenken verbunden wird. Dies ist beispielsweise bei einem Kommunikationssystem in einem Passagierflugzeug der Fall. Hierbei werden an eine Signalquelle, beispielsweise einer Audiquelle, eine hohe Anzahl an Signalsenken, beispielsweise Audiowiedergabeeinheiten angeschlossen. Dieses sind beispielsweise in den Sitzen integriert. Die Audiowiedergabeeinheiten sind alle identisch aufgebaut und weisen funktional wie auch baugemäß keine Unterschiede untereinander auf, anhand welcher die einzelnen Einheiten voneinander unterscheidbar sind.

Ein Fehlerortungsverfahren, welches in inhomogenen Netzwerken zur Anwendung kommt, liefert eine Aussage über den Fehlerort in der Weise, daß eine Aussage getroffen werden kann, vor welchem Knoten, gesehen vom Clock-Master, ein Netzwerkteilnehmer nicht mehr korrekt arbeitet, bzw. kein Signal empfangen wird. Bei diesem Verfahren registrieren die einzelnen Netzwerkteilnehmer einen Fehler durch Auftreten folgender Ereignisse: Der Netzwerkteilnehmer wurde aktiviert, beispielsweise durch Einschalten der Versorgungsspannung, und nach Ablauf einer festgelegten Zeit hat der Netzwerkteilnehmer keinerlei Netzwerkaktivität an seinem Eingang (Netzknoten) festgestellt.
Nach dieser Feststellung des Fehlers werden die Netzwerkknoten wie folgt reagieren:
Diejenigen Netzwerkteilnehmer, die im normalen Betrieb nicht als "Clock-Master" arbeiten, sondern lediglich als sogenannte "Slaves" schalten sich in zufälligen Zeitintervallen in den Zustand eines Clock-Masters und senden eine spezielle Diagnosenachricht. Der "Clock-Master" des Netzwerkes empfängt diese Nachrichten und berechnet aus den eingehenden Diagnosenachrichten den Fehlerort. Hierbei ist ausgeschlossen, daß zwei oder mehrere Netzwerkteilnehmer zur selben Zeit eine Diagnosemeldung schicken. Aus der MOST-Spezifikation Release 1.0 Version 1.0-00 von 1999 ist folgende Fehlererkennung bekannt:
Nach Inbetriebnahme eines inhomogenen Netzwerkes schalten sich, über die Betriebsspannung, sämtliche Teilnehmer ein. Im Netz ist ein Clock-Master" vorhanden. Dieser "Clock-Master" sendet eine Nachricht aus. Nach einer definierten Zeit, muß der Clock-Master" diese Nachricht wieder an seinem Eingang empfangen. Ist dies nicht der Fall, so liegt ein Fehler im Netzwerk vor. Der "Clock-Master" schaltet sich als Slave und empfängt an seinem Eingang (Netzknoten) nur noch die eingehenden Nachrichten und wertet diese aus.
Die im Netzwerk vorhandenen "Slaves" erwarten ein Signal vom "Clock-Master". Wie bereits beschrieben sendet der "Clock-Master" zunächst ein Signal ab. Sämtliche Netzwerkteilnehmer, welche vor dem Fehlerort liegen, empfangen diese Nachricht und gehen davon aus, daß das Netzwerk "in Ordnung", d.h. in Funktion ist. Ein Slave, welcher nach dem Fehlerort in das Netz eingekoppelt ist, empfängt die Nachricht des "Clock-Masters" nicht. Er wird folglich eine definierte Zeit auf eine Nachricht des "Clock-Masters" warten. Trifft innerhalb dieses vordefinierten Zeitraums eine Nachricht nicht ein, so schaltet sich der Slave in einen Clock-Master-Mode und sendet eine Fehlerdiagnosenachricht. Diese Fehlerdiagnosenachricht wird vom Clock-Master empfangen. Aufgrund dieses Verhaltens der einzelnen Slaves, welche nach der Fehlerstelle liegen, kann der Clock-Master nunmehr zurückrechnen - entgegen der Signalrichtung - zwischen welchen Slaves der Fehler vorhanden sein muß. Dies erfolgt dadurch, daß dem Clock-Master die topologische Anordnung der Slaves im Netzwerk bekannt ist. Ein Slave, welcher vor dem Fehlerort liegt, empfängt die über das Netzwerk gesendeten Signale und registriert an seinem Eingang (Netzknoten) Netzwerkaktivitäten. Daher ist für diese Slave das Netzwerk in Funktion, er wird sich weiterhin als Slave verhalten. Ein Slave nach dem Fehler im Netzwerk registriert an seinem Eingang (Netzknoten) keine Netzwerkaktivität. Nach einem definierten Zeitintervall wird sich der Slave daher in einen Clock-Master-Mode schalten und eine Nachricht absetzen. Anhand dieser Nachrichten und der Kenntnis der topologischen Struktur des Netzwerkes errechnet der Clock-Master den Fehlerort.

Bei massiv homogenen Systemen tritt nunmehr das Problem auf, daß sich die im Netzwerk vorhandenen homogenen Netzwerkteilnehmer, welche als Slaves arbeiten, identisch verhalten, da es sich um identische Teilnehmer mit identischem Aufbau und zumeist identischen Bauteilen handelt. Dies hat zur Folge, daß die einzelnen Netzwerkteilnehmer (Slaves) zeitsynchron arbeiten. Dies bedeutet, daß nach dem Einschaltvorgang sich sämtliche Netzwerkteilnehmer (Slaves) zum selbigen Netzwerk synchronen Clock-Zeitpunkt aktivieren oder deaktivieren, im oben beschriebenen Fehlerfall. Auch der Einbau eines Zufallgenerators in jeden Netzwerkteilnehmer kann diese nicht beheben, da in jedem Fall die Netzwerkteilnehmer (Slaves) gleichartig sind und sich auch gleichartig verhalten. Da auch ein Zufallsgenerator stets bei gleichem Startwert dieselben Werte liefert, ist festgelegt, daß sich die Systeme auch gleichzeitig - zeitsynchron - verhalten.

In einem solchen Fall wird dies zur Folge haben, daß sich mehrere Netzwerkteilnehmer (Slaves) nach dem Fehlerort im Netzwerk gleichartig verhalten, d.h. sich gleichzeitig in den Clock-Master-Mode schalten und Status-Signale aussenden. Diese Status-Signale werden folglich voneinander überlagert und zerstört, der Clock-Master kann keinerlei Nachrichten empfangen.

So ist beispielsweise aus WO95/01020 A1 ein drahtloses Netzwerk bekannt. Jeder Netzwerkteilnehmer überwacht die Kommunikation im Netzwerk. Jeder Netzwerkteilnehmer bestimmt für sich selbst, den Zeitpunkt der Übertragung seiner Daten im Netz, indem er entsprechend Datenraum im Netwerk für sich reserviert. Im Rahmen eines Hand-Shake-Verfahrens werden dann die Daten übermittelt.

Aufgabe der Erfindung ist es, ein Verfahren anzugeben, welches auch in massiv homogenen Systemen in einem Fehlerfall eine Unterscheidung der einzelnen Netzwerkteilnehmern durch den Clock-Master ermöglicht, auch wenn alle Systeme "baugleich" sind.

Diese Aufgabe wird durch die Merkmale der Ansprüche 1, 8 und 11 gelöst.

Vorteilhafte Ausgestaltungen der Erfindung ergeben sich durch die abhängigen Ansprüche sowie die weitere Beschreibung anhand von Figuren.

Im weiteren wird das Verfahren anhand von Figuren an einem konkreten Ausführungsbeispiel näher erläutert. Die Figuren zeigen:
- FIG 1: einen schematischen Aufbau eines massiv homogenen Netzwerkes;
- FIG 2: einer weiteren schematischen Aufbau eines massiv homogenen Netzwerkes mit einer Störung des Verbindungsbusses;
- FIG 3: einen Aufbau eines Netzwerkteilnehmers.

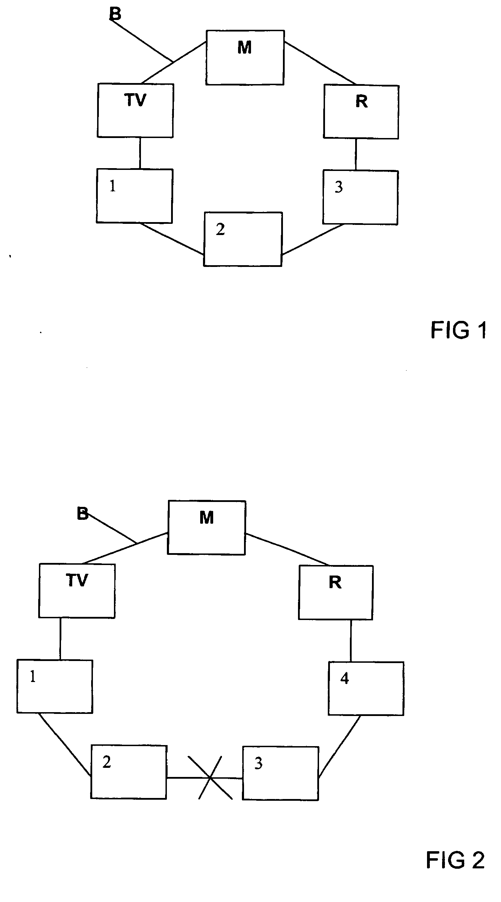

Anhand von Figur 1 ist der typische Aufbau eines unidirektionalen Netzwerkes mit einem unidirektionalen Bussystem aufgezeigt. Das Bussystem besteht aus einem Master M, dem sogenannten Clock-Master, einem Rundfunksignaltuner TV, einer Audiosignalquelle R und Netzwerkteilnehmern 1, 2, 3, welche allesamt über einen unidirektionalen Bus B verbunden sind. Der Bus B arbeitet wie folgt:

Der Clock-Master M steuert die Funktion des Netzwerkes, sowie den Zeittakt für die Versendung der Datenpakete. Der Rundfunksignaltuner TV, sowie die Audiosignalquelle R sind als fixe Adressen beim Clock-Master M angemeldet. Dies bedeutet, daß der Clock-Master M diese zwei Netzwerkteilnehmer mit Adresse exakt ansprechen kann und diese Teilnehmer mit Adresse ihrer Daten versenden. Somit ist sofort festzustellen, woher ein Datenpaket stammt.

Im weiteren sind die Netzwerkteilnehmer 1, 2, 3 angeschlossen. Bei diesen Netzwerkteilnehmern handelt es sich um massiv homogene Netzwerkteilnehmer, beispielsweise um Signalsenken, welche lediglich "passiv" Daten aus dem Netzwerk entnehmen. Die Netzwerkteilnehmer 1, 2, 3 senden normalerweise keinerlei Daten über das Netzwerk.

Ein derartiges Netzwerk ist beispielsweise in einem Passagierflugzeug, oder in einem Omnibus, oder ein einem Personenzug eingesetzt. Hierbei sind die Netzwerkteilnehmer 1, 2, 3 beispielsweise Wiedergabeeinheiten für Audiosignale und/oder Wiedergabeeinheiten für Audio-/videosignale. Derartige Netzwerkteilnehmer weisen ein Display sowie Audiowiedergabeeinheiten und Bedieneinheiten auf. Über die Bedieneinheiten ist es möglich, verschiedene, auf den Bus B bereit gestellte Rundfunkprogramme bzw. Fernsehprogramme, durch einen Nutzer auszuwählen und diese über das Display bzw. die Audioeinheiten wiederzugeben. Im weiteren weisen diese Einheiten auch Audioverstärker auf, wodurch ein Nutzer individuell die für ihn passende Wiedergabelautstärke einstellen kann.
In einem derartigen Netzwerk werden mehrere Rundfunkprogramme und auch mehrere Videoprogramme zur Verfügung stehen und auf den Bus geleitet. Dies wird über den Clock-Master M gesteuert, die Audiosignalquelle R legt verschiedenste Rundfunkprogramme auf den Bus B und der Rundfunksignaltuner TV empfängt verschiedenste Rundfunksignale, wie auch Fernsehsignale, und legt diese ebenfalls auf den Bus B. Die einzelnen Netzwerkteilnehmer 1, 2, 3 können aus den Daten auf dem Bus B verschiedene Daten auswählen und einem Nutzer bereitstellen.

FIG 2 zeigt ebenfalls einen schematischen Aufbau eines massiv homogenen Netzwerkes. Die Bezugszeichen aus FIG 1 werden beibehalten. Jedoch ist in FIG 2 ein weiteren Netzwerkteilnehmer 4 angeordnet.
Aus FIG 2 ist eine Unterbrechung zwischen den Netzwerkteilnehmer 2 und 3 eingezeichnet.

Durch diesen Fehler, zum Beispiel eine Unterbrechung der Busverbindung, ist es nicht möglich, daß die Signale auf den Bus B an jeden Netzwerkteilnehmer R, TV, 1, 2, 3, 4 verteilt werden. Durch die Unterbrechung ist der gesamte Bus B "lahmgelegt". Dies wird vom Clock-Master M erkannt. Der Clock-Master M überwacht regelmäßig seine Ausgangssignale an seinem Eingang. Sobald die Ausgangssignale am Eingang nach einer definierten Zeit nicht mehr ankommen, ist davon auszugehen, daß eine Störung des Busses B vorliegt. In diesem Fall weist der Clock-Master M die Audiosignalquelle R sowie den Rundfunksignaltuner TV an keine weiteren Daten auf dem Bus B zu legen. Bei einer Unterbrechung zwischen den Netzwerkteilnehmern 2 und 3 wird aber diese Anweisung lediglich von dem Rundfunksignaltuner TV empfangen. Dieser schaltet sich aus seinem aktiven Modus in einem passiven Modus um und gibt keine weiteren Daten auf den Bus B. Die Audiosignalquelle R hingegen empfängt dieses Signal nicht, da eine Unterbrechung des Busses B zwischen den Netzwerkteilnehmern 2 und 3 vorhanden ist. Die Audiosignalquelle R überwacht aber ebenfalls an Ihrem Eingang die von ihr gesendeten Signale. Werden diese Signale nicht innerhalb einer definierten Zeit wieder empfangen, so schaltet sich die Audiosignalquelle R ebenfalls in einen passiven Modus.

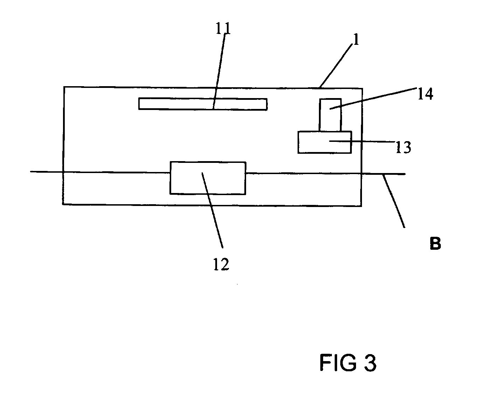

Anhand von Figur 3 wird der schematische Aufbau eines Netzwerkteilnehmers aufgezeigt. Ein derartiger Netzwerkteilnehmer besteht aus mindestens einer Ausgabeeinheit 11, einer Mikrocomputereinheit 13 sowie einem Businterface 12. Das Businterface 12 ist derart ausgestattet, daß es die auf den Bus B gesendeten Daten auswertet und an die Mikrocomputereinheit 13 weiterleitet. Die Mikrocomputereinheit 13 ist mit einer Bedieneinheit 14 verbunden. Über diese Bedieneinheit 14 ist ein Nutzer in der Lage, verschiedenste Einstellungen vorzunehmen. Über diese Bedieneinheit 14 können vorhandene auf den Bus B übertragene Rundfunkquellen oder Audiosignalquellen ausgewählt werden. Diese Auswahl wird von der Mikrocomputereinheit 13 auswertet und aus dem Datenstrom, welcher über das Businterface 12 geführt wird, auskoppelt und einem Nutzer bereitgestellt. Diese Daten werden an die Ausgabeeinheit 11 geleitet. In der Mikrocomputereinheit 12 ist eine Speichereinheit vorhanden. In diese Speichereinheit werden, in Form einer sogenannten Bandendeprogrammierung, den einzelnen Netzwerkteilnehmern 1, 2, 3, 4, während des Produktionsprozesses Produktionsnummern eingegeben. Diese Produktionsnummern entsprechen einem fortlaufenden Produktionscode. Dies bedeutet, daß jedes hergestellte Gerät eine individuelle Produktioncodenummer aufweist. Diese Produktionscodenummer ist z. B. als Hexcode oder als Binärcode ausgestaltet. Die Speichereinheit weist eine definierte Speicherstelle auf in welcher die Produktionscodenummer eingespeichert wird. Diese Speicherstelle kann infolge eines Produktionsprozesses bei jedem Gerät auf dieselbe Speicheradresse gelegt werden. Auf diese Weise ist es möglich, den Produktionscode durch eine Software, welche in der Mikrocomputereinheit 13 eines Netzwerkteilnehmers 1, 2, 3, 4 geladen ist, abgerufen werden.

Tritt nunmehr im Bus B zwischen den Netzwerkteilnehmern 2 und 3 ein Fehler auf, wird folgende vorgehensweise angewendet:
Der Clock-Master M erkennet, daß seine von seinem Ausgang gesendeten Signale an seinem Eingang nicht mehr empfangen werden. Daraufhin schaltet er sich in einen Slave-Modus. Dies bedeutet, daß er sich rein passiv verhält und nur noch Daten, welche über den Bus B gesendet werden empfängt, selbst keine Daten aber sendet. Gleiches erfolgt beim Rundfunksignaltuner TV und bei der Audiosignalquelle R. Die Netzwerkteilnehmer 1 und 2 haben, innerhalb einer definierten Zeitspanne, ein Signal des Clock-Masters M empfangen. Daher ist für sie alles in Ordnung. Die Netzwerkteilnehmer 3 und 4 jedoch haben den Clock-Master M nicht empfangen. Sie erwarten ein Signal des Clock-Masters M. Dieses Signal liegt nicht vor. Nach einer definierten Zeitspanne aktivieren nun diese Netzwerkteilnehmer 3 und 4 ihren Zufallsgenerator, welcher softwaremäßig implementiert ist, und nehmen als Startcode den in ihrer Speichereinheit abgelegten Produktionscode. Auf diese Weise ist gewährleistet, daß niemals zeitgleich die Netzwerkteilnehmer 3 und 4 Daten senden werden. Nach der durch den Zufallsgenerator errechneten Zeitspanne schaltet sich nunmehr der Netzwerkteilnehmer 3 in einen Master-Modus und sendet seine Nachricht auf den Bus B. Nach Absenden der Nachricht schaltet er sich sofort wieder in den Slave-Modus. Da die Netzwerkunterbrechung keinen Einfluß auf diese Meldung hat, empfängt der Clock-Master M diese Nachricht von Netzwerkteilnehmer 3. Netzwerkteilnehmer 4 verhält sich in gleicher Weise wie Netzwerkteilnehmer 3, er wird seine Mitteilung an den Clock-Master M jedoch zu einer unterschiedlichen Zeit von Netzwerkteilnehmer 3 absenden. Dies ist durch die oben beschriebene Verwendung des Produktionscodes als Startwert für den Zufallsgenerator gewährleistet. Der Clock-Master M empfängt nunmehr auch die Mitteilung des Netzwerkteilnehmers 4. Nach einer gewissen Zeitspanne kann der Clock-Master M nunmehr feststellen, daß von Netzwerkteilnehmer 3 und Netzwerkteilnehmer 4 Signale vorhanden sind, Netzwerkteilnehmer 2 und 1 keine Signale senden. Da dem Clock-Master M die topologische Anordnung der Netzwerkteilnehmer 1, 2, 3, 4 am Bus B bekannt ist, gibt er nunmehr die Fehlermeldung aus: "Netzwerkfehler zwischen Netzwerkteilnehmer 2 und Netzwerkteilnehmer 3". Anhand dieser Fehlermeldung kann ein Servicetechniker nunmehr nach dem Netzwerkteilnehmer 2 und vor dem Netzwerkteilnehmer 3 auf Fehlersuche gehen und den Fehler schnellstmöglich beheben.

### Bezugszeichenliste

- B: Bus
- M: Clock-Master
- R: Audiosignalquelle
- TV: Rundfunksignaltuner
- 1,2,3,4: Netzwerkteilnehmer
- 11: Ausgabeeinheit
- 12: Bus-Interface
- 13: Mikrocomputereinheit
- 14: Bedieneinheit

## Patentansprüche

1. Verfahren zur stochastischen Fehlerortung in einem massiv homogenen unidirektionalen isochronen Netzwerk (B) mit Ringtopologie bestehend aus einem Clock-Master (M), mindestens einem Netzwerkteilnehmer (TV, R) und mindestens zwei homogenen Netzwerkteilnehmern (1, 2, 3, 4),
**dadurch gekennzeichnet, dass**
im Fehlerfall im massiv homogenen unidirektionalen isochronen Netzwerk (B) in den Netzwerkteilnehmern (1, 2, 3, 4) ein Zufallsgenerator gestartet wird, wobei der Startwert des Zufallsgenerators durch einen Produktionscode festgelegt wird.

2. Verfahren nach Anspruch 1,
**dadurch gekennzeichnet, dass**
mittels des Zufallsgenerators eine Wartezeit bestimmt wird, nach der die Netzwerkteilnehmer (1,2, 3,4) Ihren Betriebs-Modus verändern und/oder vom Zufallsgenerator bei gleichem Startwert gleiche Ergebnisse generiert werden.

3. Verfahren nach Anspruch 2,
**dadurch gekennzeichnet, dass**
die Veränderung des Betriebs-Modus von einem passiven Modus in einen aktiven Modus erfolgt.

4. Verfahren nach einem oder mehreren der vorhergehenden Ansprüche,
**dadurch gekennzeichnet, dass**
im Falle einer Unterbrechung des unidirektionalen isochronen Netzwerkes (B) vor einem ersten Netzwerkteilnehmer (3) folgende Arbeitsschritte durchgeführt werden:
Schritt A: der Clock-Master (M) empfängt seine Statussignale an seinem Eingang nicht;
Schritt B: der Clock-Master (M) schaltet sich in den Slave-Modus;
Schritt C: der erste Netzwerkteilnehmer (3) empfängt kein Signal des Clock-Masters (M) und startet anhand seines in einer seiner Speicherzellen gespeicherten Produktionscodes den Zufallsgenerator mit dem Produktionscode als Startwert und anhand des Zufallsgenerator wird bestimmt, zu welchem Zeitpunkt die Umschaltung des ersten Netzwerkteilnehmers (3) in einen Master-Modus erfolgt;
Schritt D: der erste Netzwerkteilnehmer (3) sendet eine Statusmeldung und schaltet sich wieder in den Slave-Modus;
Schritt E: ein zweiter Netzwerkteilnehmer (4), welcher topologisch nach dem ersten Netzwerkteilnehmer (3) angeordnet ist, empfängt ebenfalls kein Signal des Clock-Masters (M) und startet anhand seines in einer seiner Speicherzellen gespeicherten Produktionscodes den Zufallsgenerator mit dem Produktionscode als Startwert und anhand des Zufallsgenerator wird bestimmt, zu welchem Zeitpunkt die Umschaltung des zweiten Netzwerkteilnehmers (4) in den Master-Modus erfolgt;
Schritt F: der zweite Netzwerkteilnehmer (4) sendet eine Statusmeldung und schaltet sich wieder in den Slave-Modus;
Schritt G: der Clock-Master (M) ermittelt anhand der eingehenden Statusmeldungen welcher der einzelnen Netzwerkteilnehmer (1, 2, 3,4) vor dem Fehler im massiv homogenen unidirektionalen isochronen Netzwerk (B) topologisch angeordnet ist.

5. Verfahren nach einem oder mehreren der vorhergehenden Ansprüche,
**dadurch gekennzeichnet, dass**
der Produktionscode nur einmal vergeben wird und unabänderbar im Netzwerkteilnehmer (1, 2, 3,4) gespeichert wird und/oder der Produktionscode als Binärcode oder Hexadezimalcode gespeichert wird und/oder der Produktionscode bei der Fertigung des Netzwerkteilnehmers in dessen Speicherelement eingegeben wird und/oder der Produktionscode in Form einer Bandendeprogrammierung eingegeben wird.

6. Verfahren nach einem oder mehreren der vorhergehenden Ansprüche,
**dadurch gekennzeichnet, dass**
der Produktionscode die Anzahl der produzierten Netzwerkteilnehmer ist und/oder der Productionscode fortlaufend ist.

7. Verfahren nach einem oder mehreren der vorhergehenden Ansprüche,
**dadurch gekennzeichnet, dass**
das massiv homogene unidirektionale isochrone Netzwerk (B) ein Most-Bus oder ein Fire-Wire-Bus oder ein optischer Bus ist.

8. Unidirektionales isochrones Netzwerk (B) in Ringtopologie bestehen aus einem Clock-Master (M), mindestens einem Netzwerkteilnehmer (TV, R) und mindestens zwei homogenen Netzwerkteilnehmern (1, 2, 3, 4),
**dadurch gekennzeichnet, dass**
im Fehlerfall im unidirektionalen isochronen Netzwerk (B) die Netzwerkteilnehmer (1, 2, 3, 4) einen internen Zufallsgenerator starten, wobei der Startwert des Zufallsgenerators durch einen Produktionscode festgelegt ist.

9. Unidirektionales isochrones Netzwerk (B) in Ringtopologie nach Anspruch 8,
**dadurch gekennzeichnet, dass**
die Netzwerkteilnehmer (1,2, 3,4) mittels des Zufallsgenerators eine Wartezeit bestimmen, nach der diese ihren Betriebs-Modus verändern und der Zufallsgenerator bei gleichem Startwert gleiche Ergebnisse generiert und die Veränderung des Betriebs-Modus von einem passiven Modus in einen aktiven Modus erfolgt.

10. Unidirektionales isochrones Netzwerk (B) in Ringtopologie nach Anspruch 8 oder 9,
**dadurch gekennzeichnet, dass**
im Falle einer Unterbrechung des unidirektionalen isochronen Netzwerkes (B) die Netzwerkteilnehmer (M, 1, 2, 3, 4) folgende Arbeitsschritte durchführen:
- der Clock-Master (M) empfängt keine Statussignale und schaltet sich in den Slave-Modus;
- der erste Netzwerkteilnehmer (3) empfängt kein Signal des Clock-Masters (M) und startet anhand seines in einer seiner Speicherzellen gespeicherten Produktionscodes den Zufallsgenerator mit dem Produktionscode als Startwert, wobei anhand des Zufallsgenerator bestimmt wird zu welchem Zeitpunkt die Umschaltung des ersten Netzwerkteilnehmers (3) in einen Master-Modus erfolgt;
- der erste Netzwerkteilnehmer (3) sendet eine Statusmeldung und schaltet sich wieder in den Slave-Modus;
- der zweite Netzwerkteilnehmer (4), welcher topologisch nach dem ersten Netzwerkteilnehmer (3) angeordnet ist, empfängt ebenfalls kein Signal des Clock-Masters (M) und startet anhand seines in einer seiner Speicherzellen gespeicherten Produktionscodes den Zufallsgenerator mit dem Produktionscode als Startwert, wobei er anhand des Zufallsgenerator bestimmt, zu welchem Zeitpunkt die Umschaltung des zweiten Netzwerkteilnehmers (4) in den Master-Modus erfolgt;
- der zweite Netzwerkteilnehmer (4) sendet eine Statusmeldung und schaltet sich wieder in den Slave-Modus;
- der Clock-Master (M) ermittelt anhand der eingehenden Statusmeldungen, welcher der einzelnen Netzwerkteilnehmer (1, 2, 3,4) vor dem Fehler im unidirektionalen isochronen Netzwerk (B) in Ringtopologie topologisch angeordnet ist.

11. Netzwerkteilnehmer (R, W, 1, 2, 3, 4) mit Mitteln zum Anschluss an ein unidirektionales isochrones Netzwerk (B) mit Ringtopologie, der im Fehlerfall im unidirektionalen isochronen Netzwerk einen integrierten Zufallsgenerator startet, dessen Startwert durch einen Produktionscode festgelegt ist,
wobei
der Netzwerkteilnehmer (R, W, 1, 2, 3, 4) eine Audiosignalquelle ein Rundfunksignaltuner oder eine Signalsenke ist und der Netzwerkteilnehmer (1, 2, 3, 4) eine Mikrocomputereinheit (13), ein Bus-Interface (12) und eine Ausgabeeinheit (11) aufweist und in der Mikrocomputereinheit (13) eine Speichereinheit angeordnet ist, in welcher der Produktionscode abgelegt ist, die Speichereinheit ein nicht löschbarer Speicher ist und die Mikrocomputereinheit (13) den Netzwerkteilnehmer (1, 2, 3, 4) steuert.

## Claims

1. Method for stochastic fault location in a solid homogeneous unidirectional isochronous network (B) with ring topology, consisting of a clock master (M), at least one network subscriber (TV, R) and at least two homogeneous network subscribers (1, 2, 3, 4), **characterised in that** a random generator is started in the network subscribers (1, 2, 3, 4) in the case of fault in the solid homogeneous unidirectional isochronous network (B), wherein the start value of the random generator is fixed by a production code.

2. Method according to claim 1, **characterised in that** a waiting time, after which the network subscribers (1, 2, 3, 4) change their operating mode and/or the same results are generated by the random generator with the same start value, is determined by the random generator.

3. Method according to claim 2, **characterised in that** the change of the operating mode takes place from a passive mode to an active mode.

4. Method according to one or more of the preceding claims, **characterised in that** in the case of interruption of the unidirectional isochronous network (B) in front of a first network subscriber (3) the following working steps are undertaken:
step A: the clock master (M) does not receive its status signals at its input;
step B: the clock master (M) switches to the slave mode;
step C: the first network subscriber (3) does not receive any signal of the clock master (M) and starts, on the basis of its production code stored in one of its memory cells, the random generator with the production code as start value and it is determined on the basis of the random generator at which point in time switching of the first network subscriber (3) over to a master mode takes place;
step D: the first network subscriber (3) transmits a status report and switches back to the slave mode;
step E: a second network subscriber (4), which in terms of topology is arranged after the first network subscriber (3), similarly does not receive any signal of the clock master (M) and starts, on the basis of its production code stored in one of its memory cells, the random generator with the production code as start value and it is determined on the basis of the random generator at which point in time switching of the second network subscriber (4) over to the master mode takes place;
step F: the second network subscriber (4) transmits a status report and switches back to the slave mode;
step G: the clock master (M) ascertains on the basis of the incoming status reports which of the individual network subscribers (1, 2, 3, 4) is arranged in terms of topology in front of the fault in the solid homogeneous unidirectional synchronous network (B).

5. Method according to one or more of the preceding claims, **characterised in that** the production code is allocated only once and is stored in the network subscribers (1, 2, 3, 4) to be unamendable and/or the production code is stored as a binary code or hexadecimal code and/or the production code during production of the network subscriber is input into the memory element thereof and/or the production code is input in the form of a end-of-tape programming.

6. Method according to one or more of the preceding claims, **characterised in that** the production code is the number of network subscribers produced and/or the production code is continuous.

7. Method according to one or more of the preceding claims, **characterised in that** the solid homogeneous unidirectional isochronous network (B) is a MOST-bus or a FIRE-WIRE-bus or an optical bus.

8. Unidirectional isochronous network (B) in ring topology, consisting of a clock master (M), at least one network subscriber (TV, R) and at least two homogeneous network subscribers (1, 2, 3, 4), **characterised in that** the network subscribers (1, 2, 3, 4) start an internal random generator in the case of fault in the unidirectional isochronous network (B), wherein the start value of the random generator is fixed by a production code.

9. Unidirectional isochronous network (B) in ring topology according to claim 8, **characterised in that** the network subscribers (1, 2, 3, 4) determine by means of the random generator a waiting time, after which these change their operating mode and the random generator generates the same results with the same start value and the change of the operating mode from a passive mode to an active mode takes place.

10. Unidirectional isochronous network (B) in ring topology according to claim 8 or 9, **characterised in that** in the case of interruption of the unidirectional isochronous network (B) the network subscribers (M, 1, 2, 3, 4) undertake the following working steps:
- the clock master (M) does not receive any status signals and switches to the slave mode;
- the first network subscriber (3) does not receive any signal of the clock master (M) and starts, on the basis of its production code stored in one of its memory cells, the random generator with the production code as start value, wherein on the basis of the random generator it is determined at which point in time switching of the first network subscriber (3) over to a master mode takes place;
- the first network subscriber (3) transmits a status report and switches back to the slave mode;
- the second network subscriber (4), which is arranged in terms of topology after the first network subscriber (3), similarly does not receive any signal of the clock master (M) and starts, on the basis of its production code stored in one of its memory cells, the random generator with the production code as start value, wherein it determines on the basis of the random generator at which point in time the switching of the second network subscriber (4) over to the master mode takes place;
- the second network subscriber (4) transmits a status report and switches back to the slave mode;
- the clock master (M) determines on the basis of the incoming status reports which of the individual network subscribers (1, 2, 3, 4) in terms of topology is arranged in front of the fault in the unidirectional isochronous network (B) in ring topology.

11. Network subscriber (R, W, 1, 2, 3, 4) with means for connection with a unidirectional isochronous network (B) with ring topology, which in the case of fault in the unidirectional isochronous network starts an integrated random generator, the start value of which is fixed by a production code, wherein the network subscriber (R, W, 1, 2, 3, 4) is an audio signal source, a broadcast radio signal tuner or a signal sink and the network subscriber (1, 2, 3, 4) comprises a microcomputer unit (13), a bus interface (12) and an output unit (17) and a memory unit in which the production code is filed and which is a non-erasable memory is arranged in the microcomputer unit (13) and the microcomputer unit (13) controls the network subscriber (1, 2, 3, 4).

## Revendications

1. Méthode de localisation stochastique d'erreurs dans un réseau (B) homogène massif isochrone unidirectionnel avec topologie en anneau, comprenant une horloge maître (M), au moins un participant au réseau (TV, R) et au moins deux participants homogènes au réseau (1, 2, 3, 4), **caractérisée en ce qu'**en cas d'erreur dans le réseau (B) homogène massif isochrone unidirectionnel un générateur de nombres aléatoires est lancé dans les participants au réseau (1, 2, 3, 4), la valeur de lancement du générateur de nombre aléatoires étant établie par un code de production.

2. Méthode selon la revendication 1, **caractérisée en ce qu'**au moyen du générateur de nombre aléatoires est déterminé un temps d'attente, en fonction duquel les participants au réseau (1, 2, 3, 4) modifient leur mode de fonctionnement et/ou en fonction duquel le générateur de nombre aléatoires génère des résultats identiques pour la même valeur de lancement.

3. Méthode selon la revendication 2, **caractérisée en ce que** la modification du mode de fonctionnement s'effectue par passage d'un mode passif à un mode actif.

4. Méthode selon l'une ou plusieurs des revendications précédentes, **caractérisée en ce qu'**en cas d'interruption du réseau (B) isochrone unidirectionnel avant un premier participant au réseau (3) les étapes suivantes ont lieu :
- étape A : l'horloge maître (M) ne reçoit pas ses signaux d'état à son entrée ;
- étape B : l'horloge maître (M) passe en mode esclave ;
- étape C : le premier participant au réseau (3) ne reçoit aucun signal de l'horloge maître (M) et lance à l'aide de son code de production mémorisé dans une de ses cellules de mémoire le générateur de nombres aléatoires avec le code de production comme valeur de lancement et à l'aide du générateur de nombres aléatoires est déterminé le moment auquel le premier participant au réseau (3) passe en mode maître;
- étape D : le premier participant au réseau (3) envoie un message d'état et repasse en mode esclave ;
- étape E : un deuxième participant au réseau (4), lequel est disposé du point de vue topologique après le premier participant au réseau (3), ne reçoit également aucun signal de l'horloge maître (M) et lance à l'aide de son code de production mémorisé dans une de ses cellules de mémoire le générateur de nombres aléatoires avec le code de production comme valeur de lancement et à l'aide du générateur de nombres aléatoires est déterminé le moment auquel le deuxième participant au réseau (4) passe en mode maître ;
- étape F : le deuxième participant au réseau (4) envoie un message d'état et repasse en mode esclave ;
- étape G : l'horloge maître (M) détermine à l'aide des messages d'état entrants quel participant parmi les différents participants au réseau (1, 2, 3, 4) est disposé, du point de vue topologique, avant l'erreur dans le réseau (B) homogène massif isochrone unidirectionnel.

5. Méthode selon l'une ou plusieurs des revendications précédentes, **caractérisée en ce que** le code de production n'est attribué qu'une seule fois et mémorisé de manière immuable dans le participant au réseau (1, 2, 3, 4) et/ou le code de production est mémorisé comme code binaire ou code hexadécimal et/ou le code de production est entré lors de la fabrication du participant au réseau dans l'élément mémoire de ce dernier et/ou le code de production est entré sous la forme d'une programmation de fin de bande.

6. Méthode selon l'une ou plusieurs des revendications précédentes, **caractérisée en ce que** le code de production correspond au nombre de participants au réseau produits et/ou **en ce que** le code de production est continu.

7. Méthode selon l'une ou plusieurs des revendications précédentes, **caractérisée en ce que** le réseau (B) homogène massif isochrone unidirectionnel est un bus MOST ou un bus Fire Wire ou un bus optique.

8. Réseau (B) isochrone unidirectionnel avec topologie en anneau comprenant une horloge maître (M), au moins un participant au réseau (TV,R) et au moins deux participants homogènes au réseau (1, 2, 3, 4), **caractérisé en ce qu'**en cas d'erreur dans le réseau (B) isochrone unidirectionnel les participants au réseau (1, 2, 3, 4) lancent un générateur interne de nombres aléatoires, la valeur de lancement du générateur de nombre aléatoires étant établie par un code de production.

9. Réseau (B) isochrone unidirectionnel avec topologie en anneau selon la revendication 8, **caractérisé en ce que** les participants au réseau (1, 2, 3, 4) déterminent au moyen du générateur de nombre aléatoires un temps d'attente, selon lequel ceux-ci modifient leur mode de fonctionnement et/ou selon lequel le générateur de nombre aléatoires génère pour la même valeur de lancement des résultats identiques et la modification du mode de fonctionnement a lieu par passage d'un mode passif à un mode actif.

10. Réseau (B) isochrone unidirectionnel avec topologie en anneau selon la revendication 8 ou 9, **caractérisé en ce qu'**en cas d'interruption du réseau (B) isochrone unidirectionnel les participants au réseau (1, 2, 3, 4) effectuent les étapes suivantes :
- l'horloge maître (M) ne reçoit aucun signal d'état et passe en mode esclave ;
- le premier participant au réseau (3) ne reçoit aucun signal de l'horloge maître (M) et lance à l'aide de son code de production mémorisé dans une de ses cellules de mémoire le générateur de nombres aléatoires avec le code de production comme valeur de lancement, étant précisé qu'à l'aide du générateur de nombres aléatoires est déterminé le moment auquel le premier participant au réseau (3) passe en mode maître ;
- le premier participant au réseau (3) envoie un message d'état et repasse en mode esclave ;
- le deuxième participant au réseau (4), lequel du point de vue topologique est disposé après le premier participant au réseau (3), ne reçoit également aucun signal de l'horloge maître (M) et lance à l'aide de son code de production mémorisé dans une de ses cellules de mémoire le générateur de nombres aléatoires avec le code de production comme valeur de lancement, sachant qu'à l'aide du générateur de nombres aléatoires est déterminé le moment auquel le deuxième participant au réseau (4) passe en mode maître;
- le deuxième participant au réseau (4) envoie un message d'état et repasse en mode esclave ;
- l'horloge maître (M) détermine à l'aide des messages d'état entrants quel participant parmi les différents participants au réseau (1, 2, 3, 4) est disposé, du point de vue topologique, avant l'erreur dans le réseau (B) isochrone unidirectionnel avec topologie en anneau.

11. Participant au réseau (R, W, 1, 2, 3, 4) avec des moyens pour le raccordement à un réseau (B) isochrone unidirectionnel avec topologie en anneau, ledit participant lance en cas d'erreur dans le réseau isochrone unidirectionnel un générateur intégré de nombres aléatoires dont la valeur de lancement est établie par un code de production, le participant au réseau (R, W, 1, 2, 3, 4) étant une source de signaux audio, un syntoniseur de signaux radio ou un collecteur de signaux, et le participant au réseau (1, 2, 3, 4) comportant une unité de micro-ordinateur (13), une interface de bus (12) et une unité de sortie (11) et dans l'unité de micro-ordinateur (13) étant disposée une unité de mémoire dans laquelle le code de production est stocké, l'unité de mémoire étant une mémoire non effaçable et l'unité de micro-ordinateur (13) commandant le participant au réseau (1, 2, 3, 4).
